Europäisches Patentamt

European Patent Office

Office européen des brevets

(19)

(11) Veröffentlichungsnummer: **0 302 180**
**B1**

(12) **EUROPÄISCHE PATENTSCHRIFT**

(45) Veröffentlichungstag der Patentschrift:
31.10.90

(21) Anmeldenummer: 88105951.3

(22) Anmeldetag: 14.04.88

(51) Int. Cl.⁵: **F16C 11/08**, F16C 27/06,
B62D 7/16, F16F 1/38

(54) Gelenk für Achsstreben, Lenker oder dergleichen in Kraftfahrzeugen.

(30) Priorität: 08.05.87 DE 3715360

(43) Veröffentlichungstag der Anmeldung:
08.02.89 Patentblatt 89/6

(45) Bekanntmachung des Hinweises auf die Patenterteilung:
31.10.90 Patentblatt 90/44

(84) Benannte Vertragsstaaten:
ES FR GB IT SE

(56) Entgegenhaltungen:
EP-A- 213 314
EP-A- 0 098 131
DE-C- 857 715
FR-A- 1 451 391
US-A- 2 905 492
US-A- 3 467 421

Die Akte enthält technische Angaben, die nach dem Eingang der Anmeldung eingereicht wurden und die nicht in dieser Patentschrift enthalten sind.

(73) Patentinhaber: Lemförder Metallwaren AG,
Postfach 1220, D-2844 Lemförde(DE)

(72) Erfinder: Buhl, Reinhard, Dipl.-Ing.,
Eichendorffstrasse 9, D-4508 Bohmte(DE)

(74) Vertreter: Bruse, Willy Hans Heinrich, Edisonstrasse 14,
D-2800 Bremen 33(DE)

ACTORUM AG

**Beschreibung** .

Die Erfindung betrifft ein Molekulargelenk nach dem Gattungsbegriff des Patentanspruches 1.

Bekannt ist ein solches Gelenk aus der DE-C 33 12 090. Üblich ist die Ausbildung des Gelenkkörpers als zylindrische Hülse, jedoch offenbart diese Druckschrift eine Ausbildung, bei der der Gelenkkörper beiderseits einer in der Hauptbelastungsrichtung liegenden Ebene annähernd die gleiche, in der Belastungsrichtung gemessene Materialhöhe zwischen dem Gehäuse und dem Gelenkzapfen aufweist. Dadurch wird eine gleichmäßigere Lastverteilung im Werkstoff des Gelenkkörpers und somit eine gleichmäßigere Flächenpressung erreicht. Aus der US-A 3 147 964 sind Ausnehmungen am Umfange des elastomeren Gelenkkörpers eines Molekulargelenkes bekannt, die sich nur über einen Teilbereich erstrecken, so daß die Federkennung des Gelenkkörpers in diesen Bereichen reduziert ist und sektoriell unterschiedliche Federkennungen erreicht werden.

Molekulargelenke sind wartungsfrei, unempfindlich gegenüber Schmutz, Salzwasser, Steinschlag, usw. und werden daher beim Bau von Lastkraftwagen, Baustellenfahrzeugen oder dergleichen und wegen der präzisen Achsführung sowie zum Zwecke der Erhöhung des Fahrkomforts vor allem beim Bau von Omnibussen bevorzugt.

Aufgabe der Erfindung ist die Erzielung einer sich vor allem in der Hauptbelastungsrichtung bei steigender Belastung progressiv ändernden Federkennung unter unveränderter Beibehaltung der Vorteile eines Molekulargelenkes.

Diese Aufgabe wird erfindungsgemäß durch Ausbildungsmerkmale nach dem Patentanspruch 1 gelöst.

Diese Ausbildungsmerkmale führen zu einer weichen Federung und Dämpfung bei kleiner Amplitude im Bereich der geräuscherzeugenden Frequenzen unter geringer Belastung und zu einer harten Kennung unter hohen Belastungen, zum Beispiel durch Brems- und/oder Antriebskräfte sowie Fahrbahnstöße durch Quer-, Längs- oder Hochkräfte bei gleichzeitiger präziser Achsführung.

Die erfindungsgemäß vorgesehenen Materialaussparungen führen zu einer im wesentlichen radialen Reduzierung der Vorspannung des elastomeren Werkstoffes des Gelenkkörpers im eingebauten Zustand, wobei der Werkstoff des Gelenkkörpers an der Gehäuseinnenkontur trotzdem im wesentlichen vollkommen anliegen kann oder aber zu den Flächen der Materialaussparung nur partiellen Kontakt aufweist. Bei geringer Belastung werden Lagerkräfte lediglich an den Enden des Gelenkkörpers übertragen. Mit zunehmender Radialbelastung wächst dann der Traganteil des Gelenkes, so daß auch der Federwiderstand wächst. Diese progressive Federkennung des Gelenkkörpers aus elastomerem Werkstoff entspricht theoretisch einer Parallelschaltung mehrerer Federn, bei der nach Überschreiten eines bestimmten Federweges jeweils eine weitere Feder Teile der Belastung übernimmt.

Die kardanische Kennung sowie die Torsionskennung werden durch diese Aussparungen nur sehr unwesentlich reduziert. Für die kardanische Kennung sind im wesentlichen die Traganteile der Randzonen des Gelenkes ausschlaggebend, die durch die Aussparung nur geringfügig verkleinert werden. Für die Torsionskennung sind Schubspannungen innerhalb des elastomeren Werkstoffes bestimmend. Auch diese werden nur unwesentlich gemindert.

Für Achsstreben und -lenker, die im wesentlichen nur Längskräfte abstützen, kann die Aussparung radial umlaufend, zum Beispiel durch Drehbearbeitung, hergestellt werden. Die quer zur Belastung vorhandene Radialelastizität ist unerheblich. Die Aussparung kann als Freidrehung mit seitlich angeordneten Phasen ausgeführt werden, so daß der Übergang in den Randbereich stufenförmig ist, oder mit einem kontinuierlichen Übergang von der Aussparung in den Randbereich des Gehäuses bzw. auch des Gelenkzapfens. Für die Verwendung in Verbindung mit Dreiecklenkern können die geforderten Radialkennungen in Quer- und Längsrichtung unterschiedlich sein. Die Aussparung kann in solchen Fällen, zum Beispiel durch Fräsen, nur in einer gewünschten Richtung hergestellt werden, so daß die Materialaussparungen sich nur über einen Teilbereich erstrecken.

Auf der Zeichnung ist ein Ausführungsbeispiel der Erfindung dargestellt. Es zeigen:

Figur 1 ein Molekulargelenk mit einem Kegelzapfen teilweise im Schnitt,

Figur 2 ein Molekulargelenk mit beidseitigem Befestigungsflansch teilweise im Schnitt und

Figur 3 einen Längsschnitt durch das Gehäuse ohne Gelenkzapfen und Gelenkkörper.

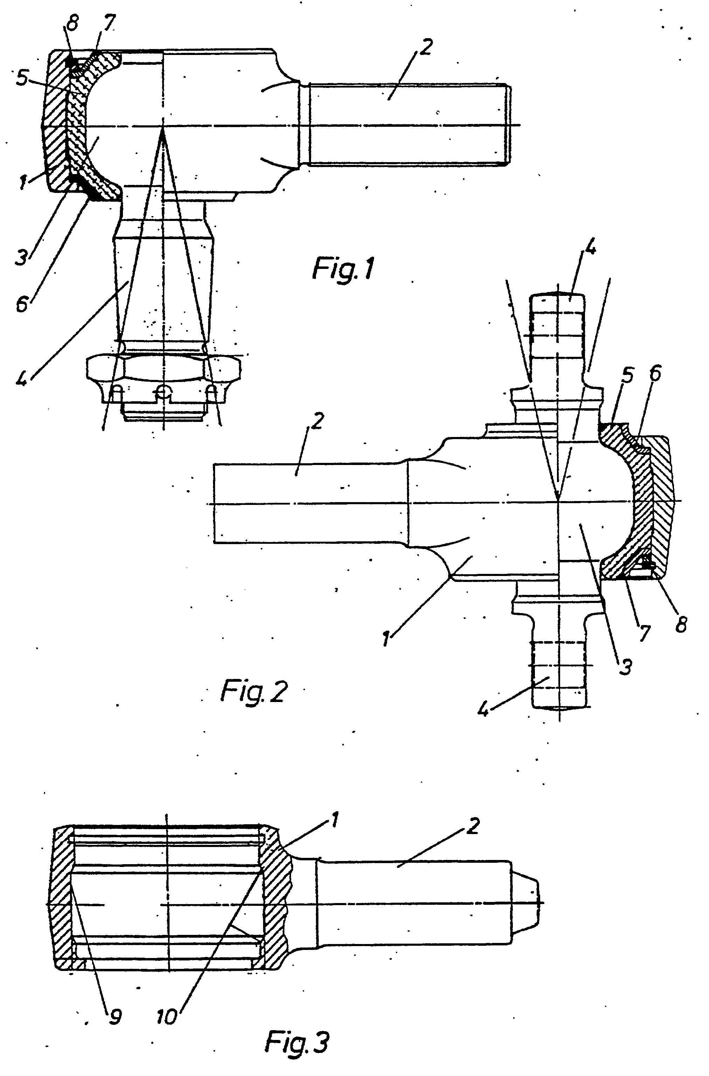

Das Molekulargelenk nach dem Ausführungsbeispiel der Figur 1 besteht aus dem metallischen Gehäuse 1 mit einem äußeren Befestigungszapfen 2, dem Gelenkzapfen 3 mit Befestigungsteil 4 und dem Gelenkkörper 5 aus einem elastischen Werkstoff. Bei dem Ausführungsbeispiel entsprechend Figur 2 ist demgegenüber abweichend, daß der Gelenkzapfen 3 beidseitig Befestigungsteile 4 für die Verbindung mit einem Flansch oder dergleichen (Pratzengelenk) aufweist. Der Tragbereich des Gelenkzapfens 3 ist bei beiden Ausführungsbeispielen ballig, kugelig oder im Mittelbereich zylindrisch mit nach beiden Seiten sich anschließenden Rundungen ausgebildet. An beiden Stirnseiten des elastomeren Gelenkkörpers 5 befinden sich Stützringe 6 und 7, von denen sich einer gegen eine innere Schulter des Gehäuses 1 abstützt und einer durch einen bei der Gelenkmontage eingelegten Sprengring 8 gehalten wird.

Zur Realisierung des Erfindungsgedankens ist bei dem Ausführungsbeispiel das Gehäuse 1 an der Innenseite im Bereich einer Zone, die sich beiderseits der mittigen Radialebene durch das Gehäuse erstreckt, eine Materialausnehmung 9 vorgesehen. Diese Materialausnehmung ist bei dem dargestellten Ausführungsbeispiel ringsumlaufend symmetrisch und geht mit seitlichen Phasen 10 in den zylindrischen Bereich der Gehäuseinnenfläche über, die die Randzonen des Gelenkkörpers 5 aus elastomerem Werkstoff abstützen. Zur Verdeutlichung dieser Ausbildung zeigt die Figur 3 einen Längsschnitt durch das Gehäuse 1 ohne Gelenkzapfen und Gelenkkörper. Anstelle des phasenförmigen Überganges 10 kann auch ein kontinuierlicher Übergang ausgebildet werden, wie es zuvor bereits erläutert wurde. Desgleichen kann die Materialaussparung 9 in Anpassung an spezifische Regelbelastungen des Gelenkes nach dem späteren Einbau auch nur in einem sich über den Umfang teilweise erstreckenden Bereich angeordnet sein. Bei den dargestellten Ausführungsbeispielen ist der Gelenkkörper 5 mit dem Gelenkzapfen 3 durch Vulkanisation festhaftend verbunden. Die festhaftende Verbindung zwischen dem Gelenkkörper und dem Gehäuse erfolgt bei der Montage des Gelenks und entsteht somit durch Reibung. Andere Variationen, z.B. nach dem Stande der Technik, sind möglich.

## Patentansprüche

1. Molekulargelenk für Achsstreben, Lenker oder dergleichen in Kraftfahrzeugen, bestehend aus einem innen im wesentlichen zylindrischen Gehäuse (1), einem etwa in der Mittelachse des Gehäuses liegenden Gelenkzapfen (3) und einem hülsenförmigen Gelenkkörper (5) aus einem elastomeren Werkstoff, der zwischen dem Gehäuse (1) und dem Gelenkzapfen (3) an beiden festhaftend und mit einer Vorspannung angeordnet ist, dadurch gekennzeichnet, daß an der Innenfläche des Gehäuses (1) in einer mittleren Zone Materialausnehmungen (9) vorgesehen sind, die die Vorspannung des hülsenförmigen Gelenkkörpers (5) aus elastomerem Werkstoff in dieser Zone herabsetzen.

2. Molekulargelenk nach dem Oberbegriff des Patentanspruches 1, dadurch gekennzeichnet, an der Oberfläche des Gelenkzapfens (3) in einer mittleren Zone Materialausnehmungen vorgesehen sind, die die Vorspannung des hülsenförmigen Gelenkkörpers (5) aus elastomerem Werkstoff in dieser Zone herabsetzen.

3. Molekulargelenk nach den Ansprüchen 1 oder 2, dadurch gekennzeichnet, daß die Materialausnehmungen (9) umlaufend symmetrisch ausgebildet sind.

4. Molekulargelenk nach den Ansprüchen 1 bis 3, dadurch gekennzeichnet, daß die Materialausnehmungen (9) mit seitlichen Phasen (10) stufenförmig in die etwa zylindrischen Flächen des Gehäuses (1) bzw. des Gelenkzapfens (3) übergehen.

5. Molekulargelenk nach den Ansprüchen 1 bis 3, dadurch gekennzeichnet, daß die Materialausnehmungen (9) stetig in die zylindrischen Flächen des Gehäuses (1) bzw. des Gelenkzapfens (3) übergehen.

6. Molekulargelenk nach den Ansprüchen 1 und 2, dadurch gekennzeichnet, daß die Materialausnehmungen (9) sich in Umfangsrichtung nur über Teilbereiche erstrecken.

## Claims

1. A molecular joint for axle struts, guide rods or the like in motor vehicles, comprising a housing (1) which is internally essentially cylindrical, a joint journal (3) arranged approximately in the central axis of the housing, and a sleeve-shaped joint element (5) made of an elastomeric material which is arranged with prestress between the housing (1) and the joint journal (3) so as to adhere to the said housing and joint journal, characterised in that in a central zone on the inner surface of the housing (1) material recesses (9) are provided, which reduce the prestress in this zone of the sleeve-shaped joint element (5) made of elastomeric material.

2. A molecular joint according to the preamble of claim 1, characterised in that in a central zone on the upper surface of the joint journal (3) material recesses are provided, which reduce the prestress in this zone of the sleeve-shaped joint element (5) made of elastomeric material.

3. A molecular joint according to claims 1 or 2, characterised in that the material recesses (9) are designed so as to be circumferentially symmetrical.

4. A molecular joint according to claims 1 to 3, characterised in that the material recesses (9) pass with lateral phases (10) in a stepped manner into the approximately cylindrical surfaces of the housing (1) or hinge journal (3).

5. A molecular joint according to claims 1 to 3, characterised in that the material recesses (9) pass gradually into the cylindrical surfaces of the housing (1) or hinge journal (3).

6. A molecular joint according to claims 1 and 2, characterised in that the material recesses (9) extend in the circumferential direction only over partial areas.

## Revendications

1. Joint moléculaire pour jambes de force d'essieux, bras oscillants ou similaires de véhicules automobiles, composé d'un boîtier (1) pratiquement cylindrique à l'intérieur, d'un axe de joint (3) qui se trouve approximativement dans l'axe du boîtier, et d'une noix de joint (5) en forme de manchon, faite d'une matière élastomère et qui est disposée entre le boîtier (1) et l'axe (3) du joint et fixée à ces deux éléments par adhérence, et sous une certaine précontrainte, caractérisé en ce que, sur la surface interne du boîtier (1) sont prévus, dans une région médiane, des évidements (9) qui réduisent dans cette zone la précontrainte de la noix (5) en forme de manchon du joint en matière élastomère.

2. Joint moléculaire selon le préambule de la revendication 1, caractérisé en ce que, sur la surface de l'axe (3) du joint, il est prévu, dans une zone médiane, des évidements qui réduisent dans cette zone la précontrainte de la noix en forme de manchon (5) du joint en matière élastomère.

3. Joint moléculaire selon les revendications 1 ou 2, caractérisé en ce que les évidements (9) sont d'une configuration circonférentielle et symétrique.

4. Joint moléculaire selon les revendications 1 à 3, caractérisé en ce que les évidements (9) se raccordent en échelon, par des chanfreins latéraux (10), à la surface approximativement cylindrique du boîtier (1) ou de l'axe (3) du joint.

5. Joint moléculaire selon les revendications 1 à 3, caractérisé en ce que les évidements (9) se raccordent aux surfaces cylindriques du boîtier (1) ou de l'axe (3) du joint sans rupture de ligne.

6. Joint moléculaire selon les revendications 1 et 2, caractérisé en ce que les évidements (9) ne s'étendent que sur des régions partielles de la circonférence.

*Fig.1*

*Fig.2*

*Fig.3*